# EUROPEAN PATENT SPECIFICATION

(11) **EP 4 422 822 B1**
(45) Date of publication and mention of the grant of the patent: **26.11.2025**
(21) Application number: 22789666.9
(22) Date of filing: 10.10.2022
(51) Int. Cl.: B23K 37/04, B23K 37/047, E04H 7/02, B23K 101/12

(54) **FABRICATION SYSTEM FOR THE MANUFACTURE OF A SUPPORT FRAME FOR A PRESSURE VESSEL, AND METHOD OF MANUFACTURE OF A SUPPORT FRAME FOR A PRESSURE VESSEL WITH SUCH FABRICATION SYSTEM**
FERTIGUNGSSYSTEM ZUR HERSTELLUNG EINES TRAGRAHMENS FÜR EINEN DRUCKBEHÄLTER UND VERFAHREN ZUR HERSTELLUNG EINES TRAGRAHMENS FÜR EINEN DRUCKBEHÄLTER MIT EINEM SOLCHEN FERTIGUNGSSYSTEM
SYSTÈME DE FABRICATION POUR LA PRODUCTION D'UNE STRUCTURE DE SUPPORT POUR UNE ENCEINTE SOUS PRESSION ET PROCÉDÉ DE FABRICATION POUR LA PRODUCTION D'UNE STRUCTURE DE SUPPORT POUR UNE ENCEINTE SOUS PRESSION AVEC UN TEL SYSTÈME DE FABRICATION

(30) Priority: 27.10.2021 GB 202115430
(43) Date of publication of application: 04.09.2024
(73) Proprietor: BAE SYSTEMS plc, London SW1Y 5AD (GB)
(72) Inventor: CARTMELL, Stuart, Barrow-in-Furness Cumbria LA14 1AF (GB)
(74) Representative: BAE SYSTEMS plc Group IP Department
(86) International application number: PCT/GB2022/052559
(87) International publication number: WO 2023/073343

(56) References cited:
- EP-A2- 1 361 017
- WO-A1-2014/203414
- CN-A- 110 948 158
- JP-A- S52 743
- JP-A- S6 024 299

## Description

### FIELD

The present invention relates to a fabrication system. In particular the disclosure is concerned with a fabrication system for the manufacture of a support frame for a pressure vessel, and to a method of manufacture of a support frame for a pressure vessel using such system, see claims 1 and 12.

### BACKGROUND

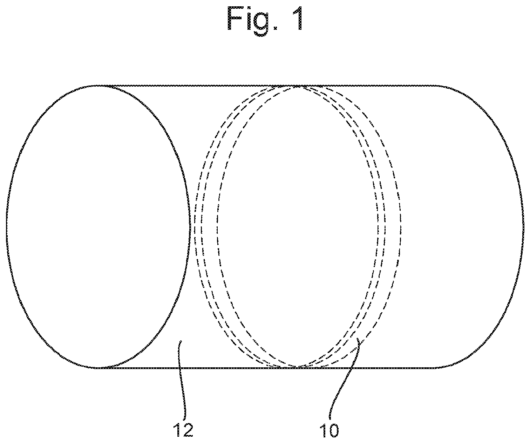

Pressure vessels often comprise a shell which is reinforced with support frames 10 which act as ribs to help maintain the shape of the shell. An example of a section of such a pressure vessel 12 is shown in Figure 1. The shell may be assembled with other sections to form a complete structure.

For large pressure vessels (for example submarines and submersibles) such support frames 10 can have a very large diameter, and consequently are made from a number of sub-elements joined together. The support frame 10 and sub-elements are large and unwieldly, and conventionally all of the preparation, joining and finishing is done by hand.

Hence the current manufacturing process for support frames requires a large amount of manual handling, manual welding and manual machining of the sub-elements, which is time consuming and relies on consistent human skill. Since the parts are large, it is inevitable that each manufacturing step will not be concluded before another operator takes over. This can result in variability of style and quality of work, which may require time consuming and costly rework, or at least produce a support frame with varied properties around its circumference.

Hence a fabrication system which is able to provide consistent results to the desired quality with less reliance on manual interaction and variation of the process, is highly desirable. CN110948158A (Zhang Meihua), JPS6024299A (Mitsubishi Heavy Ind Ltd) and WO2014/203414A1 (Honda Motor Co Ltd ; disclosing the preamble of claims 1 and 12) describe examples of the related art.

### SUMMARY

According to the present disclosure there is provided an apparatus, system and method as set forth in the appended claims. Other features of the invention will be apparent from the dependent claims, and the description which follows.

Hence, according to a first aspect of the present invention, a fabrication system (100) for the manufacture of a support frame (10) for a pressure vessel (12) is defined in claim 1. The support frame (10) may be fabricated from a plurality of sub-elements (202, 204). The fabrication system may comprise a jig assembly (300) and a clamping system (400) mounted on the jig assembly (300). The clamping system (400) may be configured to support each of the sub-elements (202, 204) individually relative to one another, and to allow movement of the sub-elements (202, 204) relative to one another to position them in a predetermined/desirable orientation relative to one another. The jig assembly (300) may be rotatably mounted about a rotation axis (302), and extending out radially from the rotation axis (302) to an outer edge (304). The jig assembly (300) may comprise a plurality of workstations (600, 602, 604) arranged around the outer edge (304) of the jig assembly (300), located and configured to perform operations on the sub-elements (202, 204) to prepare them for being joined to one another, to join them to one another to form an assembly (222) of the sub-elements (202, 204) and/or to remove material from the sub-element assembly (222) to produce the desired geometry of the support frame (10). The plurality of workstations (600, 602, 604) are mounted in a fixed position, the jig assembly (300) being rotatable about the rotation axis (302) relative to the workstations (600, 602, 604).

The jig assembly (300) may have a diameter **D,** with an outer circumference (312) centred on the rotation axis (302), the sub-elements (202, 204) arranged around the outer circumference (312) of the jig assembly (300).

The clamping system (400) may be configured to support a first sub-element type (202) and a second sub-element type (204) relative to one another, the first sub-element type (202) and a second sub-element type (204) forming a sector element (206) of the support frame (10). The clamping system (400) may be configured to support each sector element (206).

The clamping system (400) may comprise a plurality of clamping units (402) spaced apart around the circumference of the jig assembly (300).

Each clamping unit (402) may comprise a positioning actuator unit (404). The clamping unit (402) may be moveable radially **(R1, R2)** along the jig assembly (300) relative to the rotation axis (302) by the positioning actuator unit (404).

Each clamping unit (402) may comprise: a first clamping actuator unit (406) which is operable to extend in a **first axial direction A1** parallel to the rotation axis (302), and a second clamping actuator unit (408) which is operable to extend in a **second axial direction A2** parallel to the rotation axis (302); to thereby clamp a sub-element (202, 204) therebetween. The **first axial direction A1** may be opposite to the **second axial direction A2.**

Each clamping unit (402) may comprise: a stop member (410) provided towards the outer edge (304) of the jig assembly (300); a first clamping actuator unit (414) which is operable to extend in a radial direction away from the rotation axis (302) towards the stop member (410) to thereby clamp a sub-element (202, 204) between the stop member (410) and the first clamping actuator unit (414).

The stop member (410) may comprise a sub-element engagement feature (412) configured to engage with a first side edge (208) of a sub-element (202, 204); the first clamping actuator unit (406) configured to act on an opposing second side edge (210) of the sub-element (202, 204) and to force the sub-element (202, 204) into engagement with the sub-element engagement feature (412).

Each workstation (600, 602, 604) may be configured for a different operation on the sub-elements (202, 204); the operations comprising at least one of:
a. material removal to prepare the sub-elements (202, 204) for welding;
b. welding at least two sub-elements (202, 204) together; and/or
c. material removal from the joined sub-elements (202, 204) assembly (222).

Each workstation (600, 602, 604) may be provided with a different tool, configured to perform a different operation to any other tool.

The fabrication system (100) may be further provided with a measurement system (500) configured to measure the positions of predetermined datum points (502) on at least one of the workstations (600, 602, 604).

According to a second aspect of the present invention, a method of manufacture of a support frame (10) for a pressure vessel (12) is defined in claim 12. The method may comprise: providing a fabrication system (100) according to the present disclosure; locating a plurality of first sub-elements (202) towards the outer edge (304) of the jig assembly (300) in a circle centred on the rotation axis (302); rotating the jig assembly (300) around the rotation axis (302) to present, in turn, joins (212) between the located first sub-elements (202) to a workstation (600) comprising a welding system (620) to join first sub-elements (202) together a circular sub-structure (220).

The method may further comprise locating the second sub-elements (204) relative to the circular sub-structure (220) so that the second sub-elements (204) form a circle abutting the circular sub-structure (210).

The method may further comprise rotating the jig assembly (300) around the rotation axis (302), and operating the workstation (600) comprising a welding system (620) to join the second sub-elements (204) to the circular sub-structure (220).

The method of manufacture may further comprise the steps of rotating the jig assembly (300) around the rotation axis (302), and operating the workstation (602) comprising a material removal tool (622) to prepare the sub-elements (202, 204) for welding.

The method of manufacture may further comprise the steps of rotating the jig assembly (300) around the rotation axis (302), and operating the workstation (404) comprising a material removal tool (624) to remove material from the assembly (222) of joined sub-elements (202, 204).

There is thus provided a fabrication system 100, and a method of operation of a fabrication system 100, for the manufacture of a support frame 10 for a pressure vessel 12 from a plurality of sub-elements 202, 204. Such a system is operable to provide support frames 10 to a consistent and desired quality with less reliance on manual interaction.

### BRIEF DESCRIPTION OF THE FIGURES

Examples of the invention will now be described by way of example only with reference to the figures, in which:
Figure 1 shows an example of a section of a pressure vessel including a support frame which may be manufactured using an apparatus and method according to the present disclosure;
Figure 2 shows a pre-assembly (i.e. incomplete assembly) of a support frame;
Figure 3 shows a plan view of a support frame;
Figure 4 is a plan view illustration of the different elements and assemblies which may make up the support frame;
Figure 5 shows a plan view of a jig assembly of a fabrication system according to the present disclosure with the location of the support frame elements indicated by a dotted line;
Figure 6 shows a perspective view of an example of a fabrication system according to the present disclosure;
Figure 7 shows a plan view of the jig assembly of a fabrication system (as shown in Figure 5, without the support frame indicated);
Figure 8 shows an underside view of a part of the jig assembly;
Figure 9 shows a clamping unit which forms part of the fabrication system;
Figure 10 shows a different view of the clamping unit;
Figure 11 shows clamping units mounted to the jig assembly and holding sub-elements of the support frame during fabrication;
Figure 12 shows a different view of the arrangement shown in Figure 11;
Figure 13 illustrates the first workstation of the fabrication system;

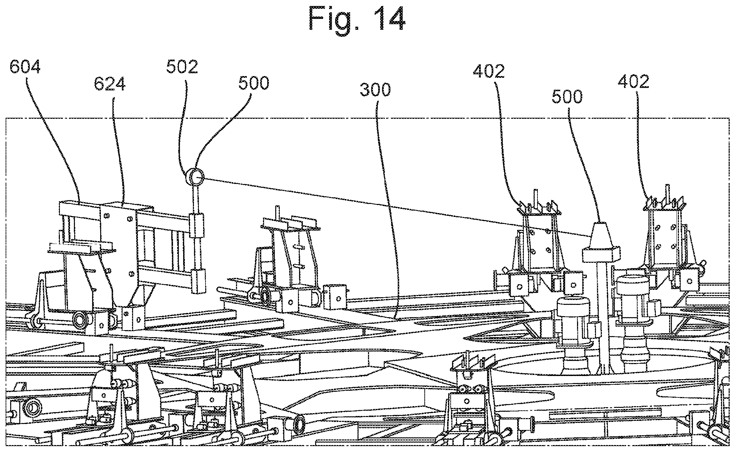

Figure 14 illustrates a third workstation and measuring system of the fabrication system;

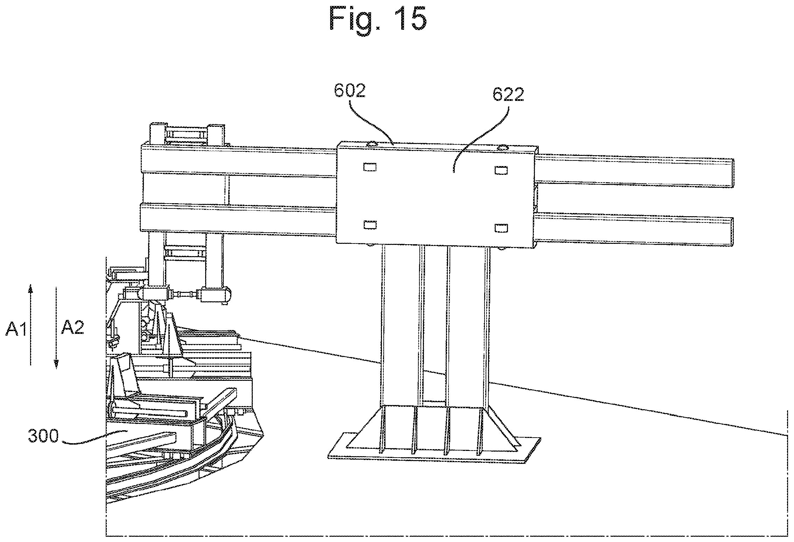

Figure 15 shows a second workstation of the fabrication system; and
Figure 16 shows a further view of the third workstation shown in Figure 14.

### DETAILED DESCRIPTION

The present invention relates to a fabrication system 100 for the manufacture of a support frame 10 for a pressure vessel 12. The present invention also relates to a method of manufacture of a support frame 10 for a pressure vessel 12. The present invention also relates to the manufacture of a pressure hull for a pressure vessel.

The pressure vessel is illustrated as cylinder in Figure 1. The pressure vessel 12 of the present disclosure may be a submarine (e.g. a submersible configured to be submerged in water), or a hull section of a submarine which when assembled with other hull sections, forms a water and air tight sealable hull for example a pressure hull. A support frame 10 of the present disclosure may be fixed to the inner surface of the pressure hull of the pressure vessel 12 (as shown in Figure 1), or to the outer surface of the pressure hull of the pressure vessel 12, to thereby provide the required strength and rigidity required of such a heavy duty piece of equipment.

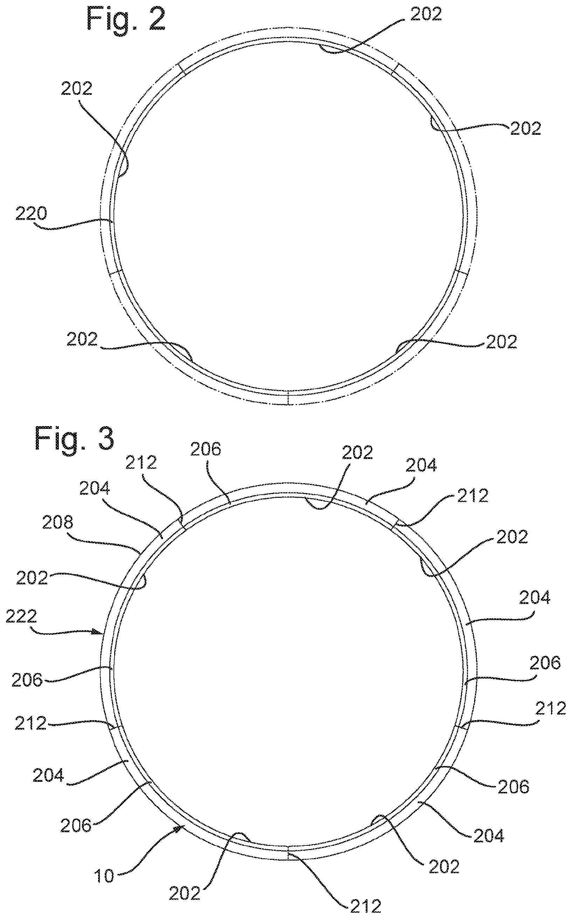

Figures 2, 3 and 4 illustrate different aspects of the support frame 10. Since the support frame 10, when finished, has a large diameter, and is typically made of metal, it is fabricated from a plurality sector elements 206 arranged in a circle or ring, for example in as shown in figure 3. In the example of figure 3 there are provided five sector elements 206 fixed to each other at joints 212 (e.g. by welding). In other examples, the support frame 10 may comprise more or less than five sector elements 206.

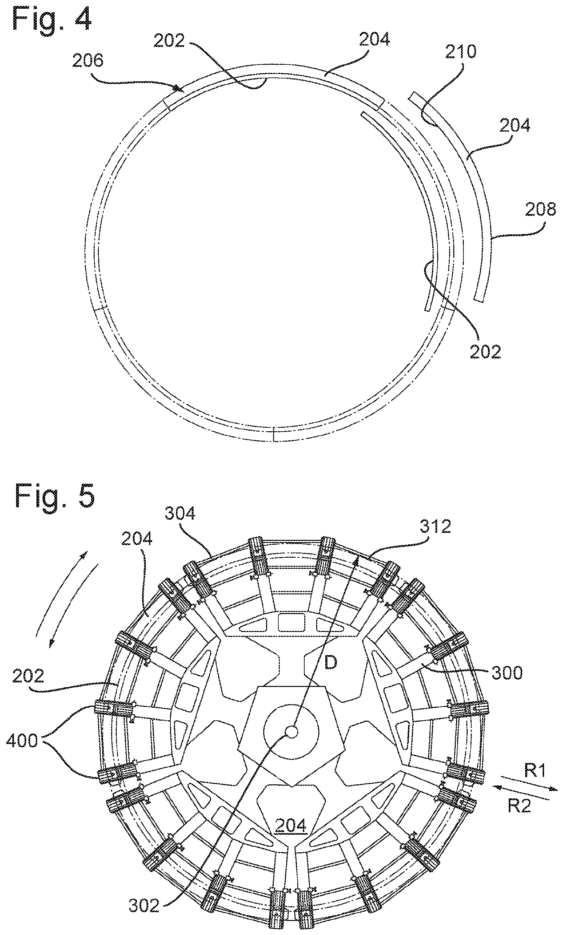

As shown in figure 4, each sector element 206 may be fabricated from a first sub-element type 202 and a second sub-element type 204.

The first sub-element 202 may be referred to as a "table" and the second sub-element 204 may be referred to as a "web".

In the example shown, both the first sub-element type 202 (table) and second sub-element type 204 (web) are provided as a sheet/strip of metal which are curved along their length. Both first sub-element type 202 and second sub-element type 204 have a length, width and thickness, the length being greater than the width, the width being greater than the thickness.

The radially inner surface of the first sub-element 202 defined by the width and length is concave, and the radially outer surface of the first sub-element 202 defined by the width and length is convex. The edges of the first sub-element 202 are flat.

The radially inner edge of the second sub-element 204 is concave, and the radially outer edge the second sub-element 204 is convex. The surfaces of the first sub-element 202 defined by the width and length is flat.

The curvature of the radially inner edge of the second sub-element 204 is the same as the curvature of the radially outer surface of the first sub-element 202, so that they fit together.

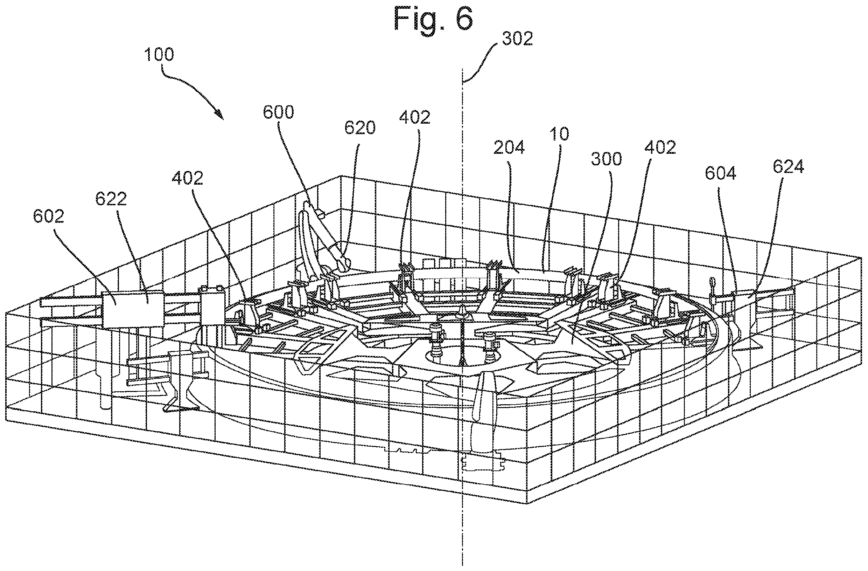

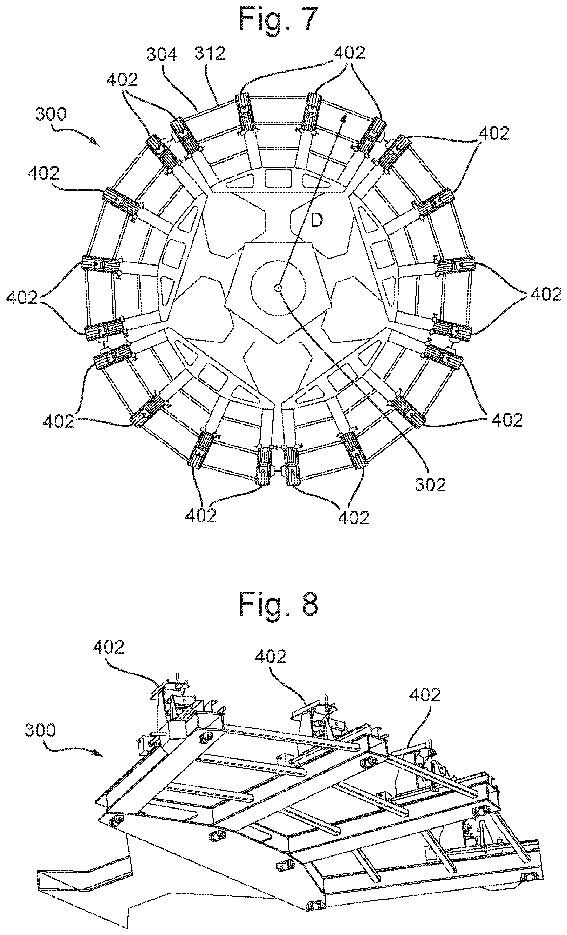

As shown in figures 5 to 7, the fabrication system 10 comprises a jig assembly 300. Figures 5, 7 are plan views of the jig assembly 300, where figure 5 illustrates how the sub-elements 202, 204 are located on the jig assembly 300 around its edge. Figure 6 is a perspective view of the jig assembly 300. Figure 8 shows an underside view of a section the jig assembly 300.

The jig assembly 300 is rotatably mounted about (and centred on) a rotation axis 302, and extends out radially from the rotation axis 302 to an outer edge 304. Hence, in the examples shown, when viewed from above, the jig assembly 300 is circular. The jig assembly 300 may be rotated around the rotation axis by a motor (not shown) with positioning control such that the jig assembly 300 can be rotated past and/or stop at workstations as required.

The fabrication system further comprises a clamping system 400 mounted on the jig assembly 300. As shown in figures 6, 7, the clamping system 400 comprises a plurality of clamping units 402 spaced apart around the edge 304 (e.g. circumference) of the jig assembly 300.

The clamping system 400 **is** configured to support each of the sub-elements 202, 204 individually relative to one another. The clamping system 400 is configured to support each of the sub-elements 202, 204 individually and relative to one another. That is to say, groups of the clamping units 402 are configured to support a first sub-element 202 and a second sub-element 204. The clamping system 400 is thus configured to support each sector element 206. The clamping system 400 may be configured to support each sector element 206 independently of at least one other sector element 206 on the support jig assembly 300. In the example shown in figures 7, 8, groups of four clamping units 402 support a first sub-element 202 and a second sub-element 204. In the examples shown there are five groups of clamping units 402, each group supporting a different pair of sub-elements 202, 204 and/or sector element 206. The clamping system 400 is configured to allow controlled movement (i.e. adjustment of position) of sub-elements 202, 204 relative to one another to locate, and fix, them in the correct orientation relative to one another.

A plurality of workstations 600, 602, 604 are arranged around the outer edge 304 of the jig assembly 300, located and configured to perform operations on the sub-elements 202, 204. For example, one of the operations may be to prepare sub-elements 202, 204 to be joined to one another, for example adding a bevel to the join regions 212. Alternatively or additionally, one of the operations may be to join sub-elements 202, 204 to one another (for example by welding) to form a sector element 206 or an assembly 222 of the sub-elements 202, 204. Alternatively or additionally, one of the operations may be to remove material from a sub-element 202, 204, a sector element 206 and/or an assembly 222 to produce the desired geometry and/or finish of the support frame 10.

The plurality of workstations 600, 602, 604 are mounted in a fixed position, the jig assembly 300 being rotatable about the rotation axis 302 relative to the workstations 600, 602, 604. The plurality of workstations 600, 602, 604 may be mounted to a substrate (e.g. workshop floor) such that they are mounted in a fixed position on the substrate. The jig assembly 300 is rotatable relative to the substrate, and hence rotatable relative to the workstations.

As shown in Figures 5, 7, the jig assembly 300 may have a diameter **D,** with an outer circumference 312 (e.g. edge 304) centred on the rotation axis 302, the sub-elements 202, 204 arranged around the outer circumference 312 (and/or edge 304) of the jig assembly 300.

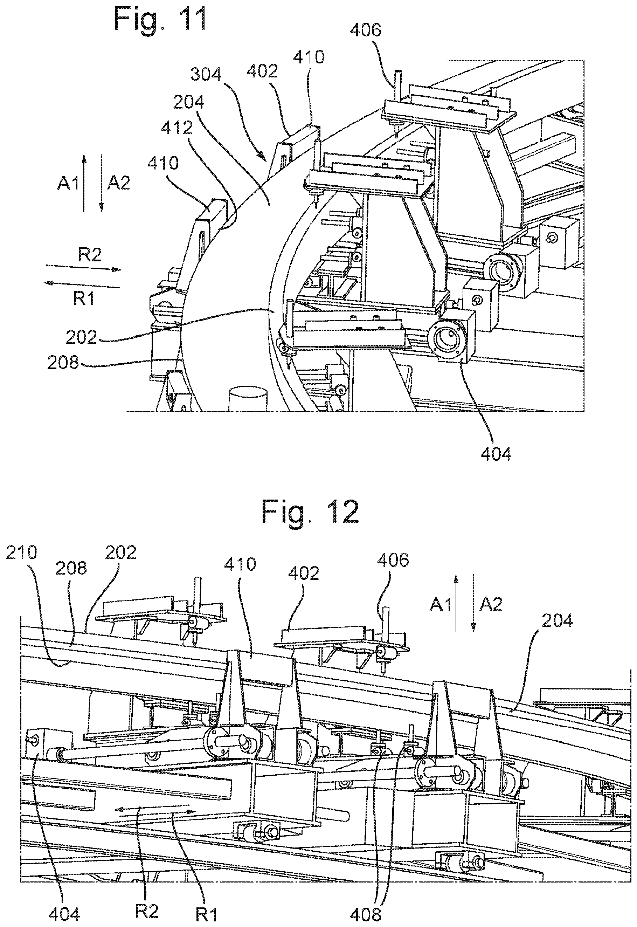

As illustrated in figures 5, 12, the clamping unit 402 is moveable radially (i.e. in opposite directions **R1,** R2) along an arm of the jig assembly 300 on which it sits, relative to the rotation axis 302. The clamping unit 402 may be operable to move along an arm of the jig assembly 300 on which it sits, away from and/or towards the rotation axis 302. Hence the clamping unit 402 may be operable to move in a **first radial direction R1** along an arm of the jig assembly 300 on which it sits away from the rotation axis 302 and/or move in a **second radial direction R2** along an arm of the jig assembly 300 on which it sits towards the rotation axis 302.

The clamping unit 402 may be moveable in radial directions **R1, R2** along an arm of the jig assembly 300 by a positioning actuator unit 404. That is to say, the clamping unit 402 is moveable radially outward in a direction **R1,** and radially inward in a direction **R2** by the positioning actuator unit 404.

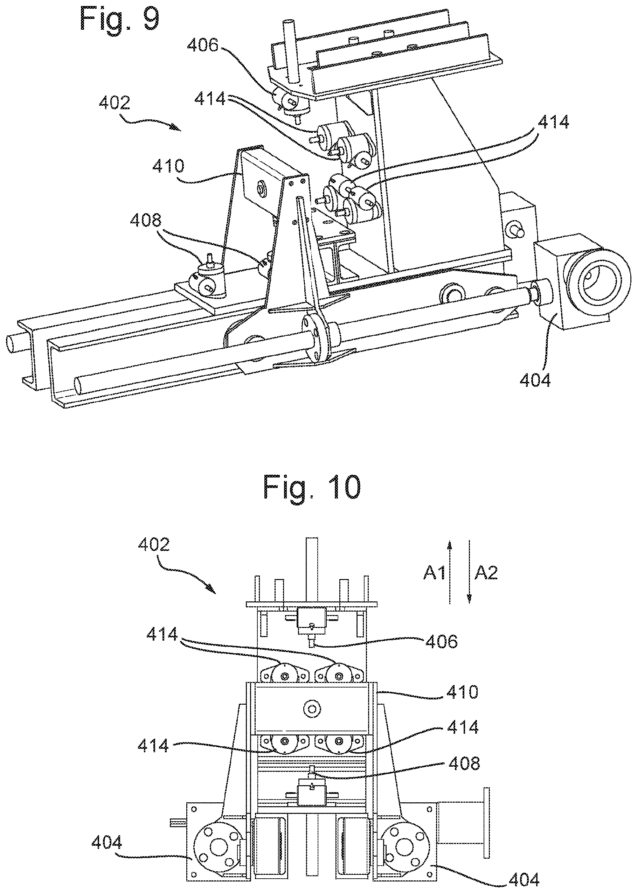

As illustrated in figures 10, 11, 12, each clamping unit 402 may also comprise a first clamping actuator unit 406 which is operable to extend in a **first axial direction A1** parallel to the rotation axis 302, and a second clamping actuator unit 408 which is operable to extend in a **second axial direction A2** parallel to the rotation axis 302 to thereby clamp a sub-element 202, 204 therebetween (i.e. between the first clamping actuator unit 406 and the second clamping actuator unit 408). Hence the **first axial direction A1** is opposite to the **second axial direction A2.**

Each clamping unit 402 comprises a stop member 410 provided towards (e.g. proximate to) the outer edge 304 of the arm of the jig assembly 300. Each clamping unit 402 may also comprise a first clamping actuator unit 414 which is operable to extend in a radial direction away from the rotation axis 302 (i.e. direction **R1)** towards the stop member 410 to thereby clamp a sub-element 202, 204 between the stop member 410 and the first clamping actuator unit 414.

As shown in Figure 11, the stop member 410 may comprises a sub-element engagement feature 412 configured to engage with a first side edge 208 of a sub-element 202, 204. The first clamping actuator unit 406 may be configured to act on an opposing second side edge 210 of the sub-element 202, 204, either directly or indirectly, and to force the sub-element 202, 204 into engagement with the sub-element engagement feature 412. The sub-element engagement feature 412 may extend away from the surface of the stop member 410, to thereby provide a spacer between the surface of the stop member 410 and the sub-element.

Each workstation 600, 602, 604 may be configured for a different operation on the sub-elements 202, 204. That is, each workstation 600, 602, 604 may be provided with a different tool, configured to perform a different operation to the other tools.

The operations may comprise at least one of material removal to prepare the sub-elements 202, 204 for welding; welding at least two sub-elements 202, 204 together; and/or material removal from the joined sub-elements 202, 204 assembly 222, for example to reduce diameter or add a bevel.

The fabrication system may be further provided with a measurement system 500 configured to measure the positions of predetermined datum points 502 on at least one of the workstations 600, 602, 604.

The manufacture of a support frame 10 for a pressure vessel 12 may be achieved by a method comprising providing a fabrication system 100 and locating a plurality of first sub-elements 202 towards the outer edge 304 of the jig assembly 300 in a circle centred on the rotation axis 302.

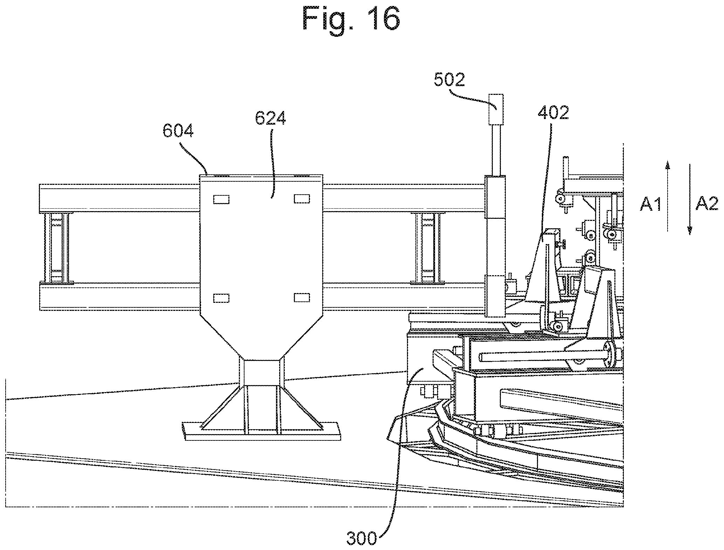

The method comprises the step of the jig assembly 300 being rotated around the rotation axis 302, so that join/joint regions 212 between the first sub-elements 202 are presented, in turn, to a workstation 602 comprising a material removal tool 624 (as shown in figure 16) to prepare the sub-elements 202, 204 for welding (for example to provide a bevel on the edges that will form the joins/joints 212).

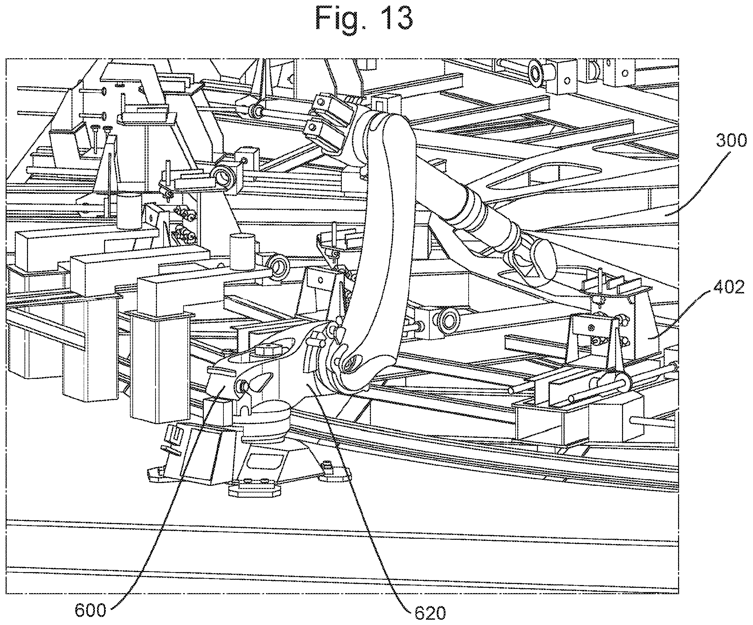

The method comprises the step of rotating the jig assembly 300 around the rotation axis 302 so that joins/joints 212 between the first sub-elements 202 are presented, in turn, to a workstation 600 comprising a welding system 620 (as shown in figure 13) to join first sub-elements 202 together to form a circular (i.e. ring shaped) sub-structure 220. The structure 220 is illustrated in Figure 2.

The method comprises locating the second sub-elements 204 relative to the circular (i.e. ring shaped) sub-structure 220 so that the second sub-elements 204 form a circle abutting the circular sub-structure 220, as shown in Figure 3.

The jig assembly 300 is rotated around the rotation axis 302, and the workstation 600 comprising the welding system 620 (as shown in figure 13) is operated to join the second sub-elements 204 to the circular sub-structure 220. They may be joined first by a tack weld and then, in a different process, by a full weld, to form the ring shaped assembly 222 as shown in figure 3.

The jig assembly 300 may then be rotated around the rotation axis 302 and the workstation 404 comprising a material removal tool 624 (as shown in figure 16) operated to remove material from the assembly 222 of joined sub-elements 202, 204, for example to reduce diameter of the assembly 222 or add a bevel to an edge.

There is thus provided an automated fabrication system 100, and a method of operation of a fabrication system, for the manufacture of a support frame 10 for a pressure vessel 12 from a plurality of sub-elements 202, 204.

The combination of support and positioning provided by the clamping system, which holds and transports elements to be machined and/or welded to a dedicated workstation tool removes the need for a human to execute the operations, reducing risk of harm to the user and increasing repeatability of the machining and weld processes.

A fabrication system according to the present invention, as defined in the appended claims, is able to provide consistent results to the desired quality with less reliance on manual interaction and variation of the process.

## Claims

1. A fabrication system (100) for the manufacture of a support frame (10) for a pressure vessel (12), the support frame (10) being fabricated from a plurality of sub-elements (202, 204), the fabrication system (100) comprising:
a jig assembly (300); the jig assembly (300) being rotatably mounted about a rotation axis (302), and extending out radially from the rotation axis (302) to an outer edge (304)
and
**characterised in that** the fabrication system (100) comprises:
a clamping system (400) mounted on the jig assembly (300); the clamping system (400) comprising a plurality of clamping units (402) spaced apart around the edge (304) and/or circumference (312) of the jig assembly (300), and to allow a controlled movement and/or adjustment of position of sub-elements (202, 204) relative to one another to locate and fix them in the correct orientation, in a predetermined/desirable orientation relative to one another;
and
a plurality of workstations (600, 602, 604) arranged around the outer edge (304) of the jig assembly (300), located and configured to perform operations on the sub-elements (202, 204) to prepare them for being joined to one another, to join them to one another to form an assembly (222) of the sub-elements (202, 204) and/or to remove material from the sub-element assembly (222) to produce the desired geometry of the support frame;
wherein the plurality of workstations (600, 602, 604) are mounted in a fixed position, the jig assembly (300) being rotatable about the rotation axis (302) relative to the workstations (600, 602, 604).

2. A fabrication system (100) as claimed in claim 1 wherein the jig assembly (300) has a diameter **D,** with the outer circumference (312) centred on the rotation axis (302), the sub-elements (202, 204) arranged around the outer circumference (312) of the jig assembly (300).

3. A fabrication system (100) as claimed in claim 1 or claim 2 wherein the clamping system (400) is configured to support a first sub-element type (202) and a second sub-element type (204) relative to one another, the first sub-element type (202) and a second sub-element type (204) forming a sector element (206) of the support frame (10), the clamping system (400) configured to support each sector element (206).

4. A fabrication system as claimed in any one of the preceding claims, wherein the clamping system comprises a plurality of clamping units spaced apart around the circumference of the jig assembly .

5. A fabrication system (100) as claimed in any one of the preceding claims, wherein each clamping unit (402) comprises a positioning actuator unit (404);
the clamping unit (402) being moveable radially (**R1**, **R2**) along the jig assembly (300) relative to the rotation axis (302) by the positioning actuator unit (404).

6. A fabrication system (100) as claimed in any one of the preceding claims, wherein each clamping unit (402) comprises:
a first clamping actuator unit (406) which is operable to extend in a **first axial direction A1** parallel to the rotation axis (302); and
a second clamping actuator unit (408) which is operable to extend in a **second axial direction A2** parallel to the rotation axis (302);
to thereby clamp a sub-element (202, 204) therebetween;
the **first axial direction A1** being opposite to the **second axial direction A2.**

7. A fabrication system (100) as claimed in any one of the preceding claims, wherein each clamping unit (402) comprises:
a stop member (410) provided towards the outer edge (304) of the jig assembly (300);
a first clamping actuator unit (414) which is operable to extend in a radial direction away from the rotation axis (302) towards the stop member (410) to thereby clamp a sub-element (202, 204) between the stop member (410) and the first clamping actuator unit (414).

8. A fabrication system (100) as claimed in claim 7 wherein the stop member (410) comprises a sub-element engagement feature (412) configured to engage with a first side edge (208) of a sub-element (202, 204); the first clamping actuator unit (406) configured to act on an opposing second side edge (210) of the sub-element (202, 204) and to force the sub-element (202, 204) into engagement with the sub-element engagement feature (412).

9. A fabrication system (100) as claimed in any one of the preceding claims, wherein each workstation (600, 602, 604) is configured for a different operation on the sub-elements (202, 204); the operations comprising at least one of:
a. material removal to prepare the sub-elements (202, 204) for welding;
b. welding at least two sub-elements (202, 204) together;
c. material removal from the joined sub-elements (202, 204) assembly (222).

10. A fabrication system (100) as claimed in claim 9 wherein each workstation (600, 602, 604) is provided with a different tool, configured to perform a different operation to any other tool.

11. A fabrication system (100) as claimed in claim 10 further provided with a measurement system (500) configured to measure the positions of predetermined datum points (502) on at least one of the workstations (600, 602, 604).

12. A method of manufacture of a support frame (10) for a pressure vessel (12), the method being **characterised by** the following steps:
providing a fabrication system (100) as claimed in any one of the preceding claims;
locating a plurality of first sub-elements (202) towards the outer edge (304) of the jig assembly (300) in a circle centred on the rotation axis (302);
rotating the jig assembly (300) around the rotation axis (302) to present, in turn, joins (212) between the located first sub-elements (202) to a workstation (600) comprising a welding system (620) to join first sub-elements (202) together to form a circular sub-structure (220);
locating the second sub-elements (204) relative to the circular sub-structure (220) so that the second sub-elements (204) form a circle abutting the circular sub-structure (210);
rotating the jig assembly (300) around the rotation axis (302), and operating the workstation (600) comprising a welding system (620) to join the second sub-elements (204) to the circular sub-structure (220).

13. A method of manufacture as claimed in claim 12 further comprising the steps of rotating the jig assembly (300) around the rotation axis (302), and operating the workstation (602) comprising a material removal tool (622) to prepare the sub-elements (202, 204) for welding.

14. A method of manufacture as claimed in claim 12 and claim 13 further comprising the steps of rotating the jig assembly (300) around the rotation axis (302), and operating the workstation (404) comprising a material removal tool (624) to remove material from the assembly (222) of joined sub-elements (202, 204).

## Patentansprüche

1. Fertigungssystem (100) für eine Herstellung eines Stützrahmens (10) für einen Druckbehälter (12), wobei der Stützrahmen (10) aus einer Vielzahl von Unterelementen (202, 204) gefertigt wird, das Fertigungssystem (100) umfassend:
eine Vorrichtungsbaugruppe (300); wobei die Vorrichtungsbaugruppe (300) um eine Drehachse (302) herum drehbar montiert ist und sich von der Drehachse (302) zu einer Außenkante (304) radial erstreckt
und
**dadurch gekennzeichnet, dass** das Fertigungssystem (100) umfasst:
ein Klemmsystem (400), das an der Vorrichtungsbaugruppe (300) montiert ist; das Klemmsystem (400) umfassend eine Vielzahl von Klemmeinheiten (402), die um den Rand (304) und/oder Umfang (312) der Vorrichtungsbaugruppe (300) herum beabstandet sind,
und
um eine kontrollierte Bewegung und/oder Einstellung der Position von Unterelementen (202, 204) relativ zueinander zu ermöglichen, um sie in der korrekten Ausrichtung, in einer vorbestimmten/gewünschten Ausrichtung relativ zueinander, zu positionieren und zu fixieren;
und
eine Vielzahl von Arbeitsstationen (600, 602, 604), die um die Außenkante (304) der Vorrichtungsbaugruppe (300) herum angeordnet sind, die fixiert und konfiguriert sind, um Vorgänge an den Unterelementen (202, 204) durchzuführen, um sie darauf vorzubereiten, miteinander verbunden zu werden, um sie aneinander zu verbinden, um eine Baugruppe (222) der Unterelemente (202, 204) auszubilden und/oder um Material aus der Unterelementbaugruppe (222) zu entfernen, um die gewünschte Geometrie des Stützrahmens zu produzieren;
wobei die Vielzahl von Arbeitsstationen (600, 602, 604) in einer festen Position montiert sind, wobei die Vorrichtungsbaugruppe (300) um die Drehachse (302) relativ zu den Arbeitsstationen (600, 602, 604) drehbar ist.

2. Fertigungssystem (100) nach Anspruch 1, wobei die Vorrichtungsbaugruppe (300) einen Durchmesser **D** aufweist, wobei der Außenumfang (312) auf der Drehachse (302) zentriert ist, wobei die Unterelemente (202, 204) um den Außenumfang (312) der Vorrichtungsbaugruppe (300) herum angeordnet sind.

3. Fertigungssystem (100) nach Anspruch 1 oder 2, wobei das Klemmsystem (400) konfiguriert ist, um einen ersten Unterelementtyp (202) und einen zweiten Unterelementtyp (204) relativ zueinander zu stützen, wobei der erste Unterelementtyp (202) und der zweite Unterelementtyp (204) ein Sektorelement (206) des Stützrahmens (10) ausbilden und das Klemmsystem (400) konfiguriert ist, um jedes Sektorelement (206) zu stützen.

4. Fertigungssystem nach einem der vorstehenden Ansprüche, wobei das Klemmsystem eine Vielzahl von Klemmeinheiten umfasst, die um den Umfang der Vorrichtungsbaugruppe herum beabstandet sind.

5. Fertigungssystem (100) nach einem der vorstehenden Ansprüche, wobei
wobei jede Klemmeinheit (402) eine Positionierungsaktuatoreinheit (404) umfasst;
wobei die Klemmeinheit (402) entlang der Vorrichtungsbaugruppe (300) relativ zu der Drehachse (302) durch die Positionierungsaktuatoreinheit (404) radial **(R1, R2)** bewegbar ist.

6. Fertigungssystem (100) nach einem der vorstehenden Ansprüche, wobei jede Klemmeinheit (402) umfasst:
eine erste Klemmaktuatoreinheit (406), die betriebsfähig ist, um sich in einer **ersten axialen Richtung A1** parallel zu der Drehachse (302) zu erstrecken; und
eine zweite Klemmaktuatoreinheit (408), die betriebsfähig ist, um sich in einer **zweiten axialen Richtung A2** parallel zu der Drehachse (302) zu erstrecken;
um dadurch ein Unterelement (202, 204) dazwischen einzuklemmen;
wobei die erste axiale Richtung A1 gegenüber der zweiten axialen Richtung A2 ist.

7. Fertigungssystem (100) nach einem der vorstehenden Ansprüche, wobei jede Klemmeinheit (402) umfasst:
ein Anschlagsglied (410), das zu der Außenkante (304) der Vorrichtungsbaugruppe (300) hin bereitgestellt ist;
eine erste Klemmaktuatoreinheit (414), die betriebsfähig ist, um sich in eine radiale Richtung weg von der Drehachse (302) zu dem Anschlagsglied (410) hin zu erstrecken, um dadurch ein Unterelement (202, 204) zwischen dem Anschlagsglied (410) und der ersten Klemmaktuatoreinheit (414) einzuklemmen.

8. Fertigungssystem (100) nach Anspruch 7, wobei das Anschlagsglied (410) ein Unterelementeingriffsmerkmal (412) umfasst, das konfiguriert ist, um in eine erste Seitenkante (208) eines Unterelements (202, 204) einzugreifen; wobei die erste Klemmbetätigungseinheit (406) konfiguriert ist, um auf eine gegenüberliegende zweite Seitenkante (210) des Unterelements (202, 204) einzuwirken und das Unterelement (202, 204) in Eingriff mit dem Unterelementeingriffsmerkmal (412) zu zwingen.

9. Fertigungssystem (100) nach einem der vorstehenden Ansprüche, wobei jede Arbeitsstation (600, 602, 604) für einen unterschiedlichen Vorgang an den Unterelementen (202, 204) konfiguriert ist; die Vorgänge umfassend mindestens eines von:
a. einer Materialentfernung, um die Unterelemente (202, 204) für ein Schweißen vorzubereiten;
b- einem Zusammenschweißen von mindestens zwei Unterelementen (202, 204);
c. einer Materialentfernung von der Baugruppe (222) der verbundenen Unterelemente (202, 204).

10. Fertigungssystem (100) nach Anspruch 9, wobei jede Arbeitsstation (600, 602, 604) mit einem unterschiedlichen Werkzeug versehen ist, das konfiguriert ist, um einen unterschiedlichen Vorgang als jedes beliebige andere Werkzeug durchzuführen.

11. Fertigungssystem (100) nach Anspruch 10, das ferner mit einem Messsystem (500) bereitgestellt ist, das konfiguriert ist, um die Positionen vorbestimmter Bezugspunkte (502) auf mindestens einer der Arbeitsstationen (600, 602, 604) zu messen.

12. Verfahren für die Herstellung eines Stützrahmens (10) für einen Druckbehälter (12), wobei das Verfahren **gekennzeichnet ist durch** die folgenden Schritte:
Bereitstellen eines Fertigungssystems (100) nach einem der vorstehenden Ansprüche;
Fixieren einer Vielzahl von ersten Unterelementen (202) zu der Außenkante (304) der Vorrichtungsbaugruppe (300) hin in einem Kreis, der auf der Drehachse (302) zentriert ist;
Drehen der Vorrichtungsbaugruppe (300) um die Drehachse (302) herum, um der Reihe nach Verbindungen (212) zwischen den fixierten ersten Unterelementen (202) einer Arbeitsstation (600), umfassend ein Schweißsystem (620), vorzulegen, um erste Unterelemente (202) miteinander zu verbinden, um eine kreisförmige Unterstruktur (220) auszubilden;
Fixieren der zweiten Unterelemente (204) relativ zu der kreisförmigen Unterstruktur (220), sodass die zweiten Unterelemente (204) einen Kreis ausbilden, der an die kreisförmige Unterstruktur (210) angrenzt;
Drehen der Vorrichtungsbaugruppe (300) um die Drehachse (302) herum und Bedienen der Arbeitsstation (600), umfassend ein Schweißsystem (620), um die zweiten Unterelemente (204) mit der kreisförmigen Unterstruktur (220) zu verbinden.

13. Herstellungsverfahren nach Anspruch 12, ferner umfassend die Schritte des Drehens der Vorrichtungsbaugruppe (300) um die Drehachse (302) herum, und des Bedienens der Arbeitsstation (602), umfassend die Schritte ein Materialentfernungswerkzeug (622), um die Unterelemente (202, 204) zum Schweißen vorzubereiten.

14. Herstellungsverfahren nach Anspruch 12 und 13, ferner umfassend die Schritte des Drehens der Vorrichtungsbaugruppe (300) um die Drehachse (302) herum und des Bedienens der Arbeitsstation (404), umfassend ein Materialentfernungswerkzeug (624), um Material von der Baugruppe (222) von verbundenen Unterelementen (202, 204) zu entfernen.

## Revendications

1. Système de fabrication (100) permettant la fabrication d'un cadre de support (10) pour un récipient sous pression (12), le cadre de support (10) étant fabriqué à partir d'une pluralité de sous-éléments (202, 204), le système de fabrication (100) comprenant :
un assemblage de gabarits (300) ;
l'assemblage de gabarits (300) étant monté rotatif autour d'un axe de rotation (302) et s'étendant radialement à partir de l'axe de rotation (302) jusqu'à un bord extérieur (304) ;
et
**caractérisé en ce que** le système de fabrication (100) comprend :
un système de serrage (400) monté sur l'assemblage de gabarits (300) ; le système de serrage (400) comprenant une pluralité d'unités de serrage (402) espacées autour du bord (304) et/ou de la circonférence (312) de l'assemblage de gabarits (300),
et
pour permettre un mouvement commandé et/ou un ajustement de position de sous-éléments (202, 204) les uns par rapport aux autres afin de les placer et de les fixer dans l'orientation correcte, dans une orientation prédéterminée/souhaitable les uns par rapport aux autres ; et
une pluralité de postes de travail (600, 602, 604) agencés autour du bord extérieur (304) de l'assemblage de gabarits (300), situés et conçus pour réaliser des opérations sur les sous-éléments (202, 204) afin de les préparer à être joints les uns aux autres, de les joindre les uns aux autres pour former un assemblage (222) des sous-éléments (202, 204) et/ou de retirer une matière de l'assemblage de sous-éléments (222) afin de produire la géométrie souhaitée du cadre de support ;
dans lequel la pluralité de postes de travail (600, 602, 604) est montée dans une position fixe, l'assemblage de gabarits (300) pouvant tourner autour de l'axe de rotation (302) par rapport aux postes de travail (600, 602, 604).

2. Système de fabrication (100) selon la revendication 1, dans lequel l'assemblage de gabarits (300) a un diamètre **D,** la circonférence extérieure (312) étant centrée sur l'axe de rotation (302), les sous-éléments (202, 204) étant agencés autour de la circonférence extérieure (312) de l'assemblage de gabarits (300).

3. Système de fabrication (100) selon la revendication 1 ou la revendication 2, dans lequel le système de serrage (400) est conçu pour supporter un premier type de sous-élément (202) et un second type de sous-élément (204) l'un par rapport à l'autre, le premier type de sous-élément (202) et un second type de sous-élément (204) formant un élément de secteur (206) du cadre de support (10), le système de serrage (400) étant conçu pour supporter chaque élément de secteur (206).

4. Système de fabrication selon l'une quelconque des revendications précédentes, dans lequel le système de serrage comprend une pluralité d'unités de serrage espacées les unes des autres sur la circonférence de l'assemblage de gabarits.

5. Système de fabrication (100) selon l'une quelconque des revendications précédentes,
dans lequel chaque unité de serrage (402) comprend une unité d'actionnement de positionnement (404) ;
l'unité de serrage (402) pouvant être déplacée radialement **(R1, R2) le** long de l'assemblage de gabarits (300) par rapport à l'axe de rotation (302) par l'unité d'actionnement de positionnement (404).

6. Système de fabrication (100) selon l'une quelconque des revendications précédentes, dans lequel chaque unité de serrage (402) comprend :
une première unité d'actionnement de serrage (406) qui peut s'étendre dans une **première direction axiale A1** parallèle à l'axe de rotation (302) ; et
une seconde unité d'actionnement de serrage (408) qui peut s'étendre dans une **seconde direction axiale A2** parallèle à l'axe de rotation (302) ;
afin de serrer un sous-élément (202, 204) entre les deux ;
la première direction axiale A1 est opposée à la seconde direction axiale A2.

7. Système de fabrication (100) selon l'une quelconque des revendications précédentes, dans lequel chaque unité de serrage (402) comprend :
un organe de butée (410) placé vers le bord extérieur (304) de l'assemblage de gabarits (300) ;
une première unité d'actionnement de serrage (414) qui peut s'étendre dans une direction radiale à l'écart de l'axe de rotation (302) vers l'organe de butée (410) afin de serrer un sous-élément (202, 204) entre l'organe de butée (410) et la première unité d'actionnement de serrage (414).

8. Système de fabrication (100) selon la revendication 7, dans lequel l'organe de butée (410) comprend un composant de mise en prise de sous-élément (412) conçu pour venir en prise avec un premier bord latéral (208) d'un sous-élément (202, 204) ; la première unité d'actionnement de serrage (406) étant conçue pour agir sur un second bord latéral opposé (210) du sous-élément (202, 204) et pour forcer le sous-élément (202, 204) à venir en prise avec le composant de mise en prise de sous-élément (412).

9. Système de fabrication (100) selon l'une quelconque des revendications précédentes, dans lequel chaque poste de travail (600, 602, 604) est conçu pour une opération différente sur les sous-éléments (202, 204) ; les opérations comprenant au moins l'un parmi :
a. le retrait de matière pour préparer les sous-éléments (202, 204) au soudage ;
b. le soudage d'au moins deux sous-éléments (202, 204) ;
c. le retrait de matière de l'assemblage (222) de sous-éléments (202, 204) joints.

10. Système de fabrication (100) selon la revendication 9, dans lequel chaque poste de travail (600, 602, 604) est équipé d'un outil différent, conçu pour réaliser une opération différente de celle d'un quelconque autre outil.

11. Système de fabrication (100) selon la revendication 10, équipé en outre d'un système de mesure (500) conçu pour mesurer les positions de points de référence prédéterminés (502) sur au moins l'un parmi les postes de travail (600, 602, 604).

12. Procédé de fabrication d'un cadre de support (10) pour un récipient sous pression (12), le procédé étant **caractérisé par** les étapes suivantes consistant à :
fournir un système de fabrication (100) selon l'une quelconque des revendications précédentes ;
placer une pluralité de premiers sous-éléments (202) vers le bord extérieur (304) de l'assemblage de gabarits (300) dans un cercle centré sur l'axe de rotation (302) ;
faire tourner l'assemblage de gabarits (300) autour de l'axe de rotation (302) pour présenter, à son tour, des jointures (212) entre les premiers sous-éléments (202) placés à un poste de travail (600) comprenant un système de soudage (620) pour joindre les premiers sous-éléments (202) afin de former une sous-structure circulaire (220) ;
placer les seconds sous-éléments (204) par rapport à la sous-structure circulaire (220) de sorte que les seconds sous-éléments (204) forment un cercle venant en butée avec la sous-structure circulaire (210) ;
faire tourner l'assemblage de gabarits (300) autour de l'axe de rotation (302), et faire fonctionner le poste de travail (600) comprenant un système de soudage (620) pour joindre les seconds sous-éléments (204) à la sous-structure circulaire (220).

13. Procédé de fabrication selon la revendication 12, comprenant en outre les étapes consistant à faire tourner l'assemblage de gabarits (300) autour de l'axe de rotation (302) et à faire fonctionner le poste de travail (602) comprenant un outil de retrait de matière (622) pour préparer les sous-éléments (202, 204) au soudage.

14. Procédé de fabrication selon les revendications 12 et 13, comprenant en outre les étapes consistant à faire tourner l'assemblage de gabarits (300) autour de l'axe de rotation (302) et à faire fonctionner le poste de travail (404) comprenant un outil de retrait de matière (624) pour retirer de la matière de l'assemblage (222) de sous-éléments joints (202, 204).
